## Europäisches Patentamt

## European Patent Office

## Office européen des brevets

(19)

(11) Veröffentlichungsnummer: **0 221 315**
**B1**

(12) **EUROPÄISCHE PATENTSCHRIFT**

(45) Veröffentlichungstag der Patentschrift:
**14.06.89**

(51) Int. Cl.⁴: **G01N 35/06**

(21) Anmeldenummer: **86113068.0**

(22) Anmeldetag: **23.09.86**

(54) **Entnahmevorrichtung.**

(30) Priorität: **09.10.85  CH 4356/85**

(43) Veröffentlichungstag der Anmeldung:
**13.05.87 Patentblatt 87/20**

(45) Bekanntmachung des Hinweises auf die Patenterteilung:
**14.06.89 Patentblatt 89/24**

(84) Benannte Vertragsstaaten:
**CH DE FR GB IT LI NL**

(56) Entgegenhaltungen:
**EP-A- 0 088 679**
**FR-A- 1 568 072**
**US-A- 3 991 627**
**US-A- 4 342 341**

(73) Patentinhaber: **KONTRON-HOLDING AG, Bernerstrasse Süd 169, CH-8048 Zürich(CH)**

(72) Erfinder: **Müller, Paul, Albisstrasse 58, CH-6312 Steinhausen(CH)**

(74) Vertreter: **Buntz, Gerhard et al, Grenzacherstrasse 124 Postfach 3255, CH-4002 Basel(CH)**

**Beschreibung**

Die Erfindung betrifft eine Vorrichtung zur Entnahme von Flüssigkeitsmengen aus Behältern, die mit einem Deckel verschlossen sind.

Aus Gründen der Sterilität und der Lösungsmittelverdampfung werden Reagenzien und Proben für automatische Analysensysteme häufig in Behältern bereitgestellt, die mit einem elastischen Septum oder einem Kunststoffdeckel verschlossen sind. Die Entnahme erfolgt mit Hilfe einer hohlen Entnahmenadel die über ein Schlauchsystem mit einer Pumpe verbunden ist und den Deckel durchsticht, um in das Flüssigkeitsvolumen einzutauchen.

Zur Vermeidung von Kontaminationen werden häufig auch Analysenproben in derartigen Behältern verschickt bzw. angeliefert. Die Probenentnahme erfolgt dann ebenfalls mit einer derartigen Entnahmevorrichtung mit einer geeigneten Hohlnadel.

Zum sauberen Durchstechen des elastischen, meist aus einer Gummimembran bestehenden Deckels muss die Nadel einen besonderen, hochpräzisen Schliff aufweisen, was dazu führt, dass die Nadel verhältnismässig teuer ist. Trotzdem lässt es sich häufig nicht vermeiden, dass die Nadel durch abgetragene Membranteile verstopft wird. Die Kraft, die zum Durchstossen Membran aufgewendet werden muss, ist trotz spezieller Schliffformen der Nadelspitze verhältnismässig hoch, sodass bei den Schwenkarmen und Lagern hohe Kräfte auftreten. Ein weiterer Nachteil besteht schliesslich darin, dass die Membran dicht an der Nadel anschliesst, sodass bei der Entnahme von Flüssigkeit ein Unterdruck im Flüssigkeitsbehälter entsteht, der nachteilige Folgen hat. So kann beispielsweise durch diesen Unterdruck de Genauigkeit der Probenentnahme bei kleinen Probenmengen verschlechtert werden.

Bisher wurde keine Form des Schliffs einer Hohlnadel gefunden, mit der diese Nachteile beseitigt werden können. Der Erfindung liegt daher die Aufgabe zugrunde eine Lösung anzugeben, mit der diese Nachteile vermeidbar sind.

Erfindungsgemäss wird dies erreicht durch eine Vorrichtung der eingangs erwähnten Art, bei der neben der und im Abstand von der Entnahmehohlnadel ein Vorstechwerkzeug angebracht ist und dass Mittel zur Steuerung der relativen mechanischen Bewegung zwischen Nadelträger und Behälter vorgesehen sind derart, dass bei einer ersten Tiefbewegung des Nadelträgers der Deckel vom Vorstecher durchstochen wird und danach, nach einer relativen seitlichen Verschiebung um den Abstand zwischen Vorstecher und Hohlnadel die Hohlnadel durch den vorgestochenen Einschnitt den Deckel durchdringt.

Im folgenden wird anhand der beiliegenden Zeichnung ein Ausführungsbeispiel der Erfindung beschrieben. Es zeigen

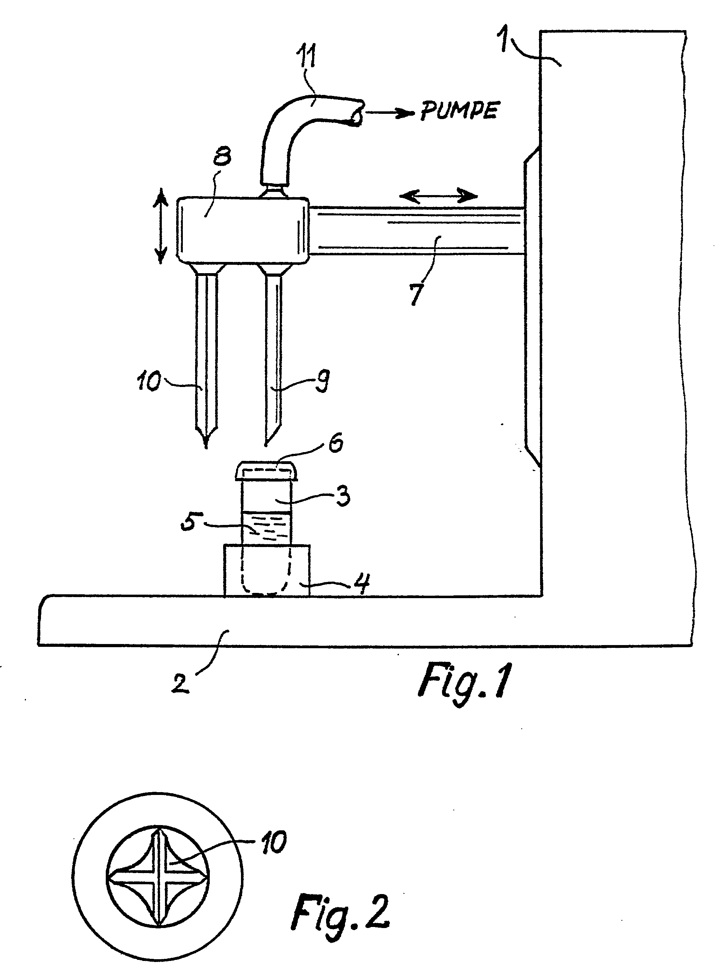

Fig. I eine schematische Darstellung einer Entnahmevorrichtung
Fig. 2 einen Teil der Vorrichtung von unten.

Wie in Fig. I gezeigt, besitzt eine Pipettiervorrichtung ein Gehäuse I, das ein tischförmiges Unterteil 2 aufweist. Auf dem tischförmigen Unterteil 2 werden Flüssigkeitsbehälter 3 angeordnet, aus denen eine Flüssigkeitsmenge pipettiert werden soll. Die Behälter 3, von denen in der Zeichnung nur ein Beispiel gezeigt ist, befinden sich in Gestellen 4, die entweder in bestimmter Position auf dem Unterteil 2 fixiert sind oder durch eine (nicht gezeigte) Transportvorrichtung auf dem Unterteil 2 unter einer Entnahmeposition hindurchgefördert werden.

Die Behälter 3 sind mit Flüssigkeit 5, beispielsweise Reagenzien, Proben, etc., gefüllt und mit einer elastschen Membran 6 verschlossen. Die Membran besteht beispielsweise aus Gummi, Kunststoff, etc.

Am oberen Teil des Gehäuses I ist an einem Arm 7 ein Pipettierkopf 8 angeordnet, der eine nach unten gerichtete Pipettiernadel 9 und ein im Abstand parallel zu ihr angeordnetes Vorstechwerkzeug I0 aufweist. Der Arm 7 ist durch eine (nicht gezeigte) Antriebsvorrichtung in Richtung der Pfeile, d.h. also waagrecht und senkrecht verschiebbar. Die Mechanik, mit der bei Pipettiervorrichtungen solche Bewegungen durchgeführt werden, sind in der Technik bekannt und brauchen daher hier nicht im Detail beschrieben zu werden.

Die Pipettiernadel 9 ist eine Hohlnadel die sich durch den Pipettierkopf 8 hindurch erstreckt und oben mit einem Schlauch II verbunden ist, der zu einer Pumpe führt.

Das Vorstechwerkzeug I0 ist fest an der Unterseite des Pipettierkopfes 8 angebracht. Es besitzt einen im wesentlichen kreuzförmigen Querschnitt und eine scharf geschliffene Spitze. Die Fig. 2 zeigt eine Ansicht des Vorstechwerkzeugs von unten.

Die (nicht gezeigte) Antriebsvorrichtung des Armes 7 bewirkt für jeden neuangekommenen Behälter folgenden mechanischen Ablauf:

I. Durch entsprechende seitliche Verschiebung wird das Vorstechwerkzeug I0 in eine annähernd konzentrische Position zum Behälter 3 gebracht.

2. Durch vertikales Absenken des Armes 7 und damit des Vorstechwerkzeugs I0 wird die Membran durchstochen. Dabei entsteht ein annähernd exakter kreuzförmiger Einschnitt in der Membran.

3. Durch Anheben wird das Vorstechwerkzeug I0 von der Membran entfernt. Der kreuzförmige Einschnitt schliesst sich in der Art eines einfachen Ventils.

4. Der Arm 7 wird um den Abstand zwischen Vorstechwerkzeug I0 und Pipettiernadel 9 relativ zum Behälter 3 nach links verschoben um die Nadel 9 konzentrisch über den Behälter 3 zu bringen.

5. Durch Absenken wird die Pipettiernadel 9 durch den vorher angebrachten Einschnitt in den Behälter 3 und in die Flüssigkeit 5 eingebracht, um Flüssigkeit anzusaugen.

Durch die Trennung der Funktionen des Einschneidens der Membran und des Durchführens der Pipettiernadel ergibt sich eine Reihe von Vorteilen. Das Vorstechwerkzeug kann in Material und Form so ausgebildet sein, dass es mit wesentlich geringerem Kraftaufwand die Membran durchschneidet. Beim Durchschneiden entsteht ein exakter kreuzförmiger Einschnitt, der sich, wenn weder das Vorstechwerkzeug noch die Pipettiernadel eingeführt sind, von selbst immer wieder weitgehend dicht verschliesst in der Art einer Ventilfunktion. Ferner kann durch die Form des Vorstechwerkzeugs der Einschnitt so dimensioniert werden, dass bei eingeführter Pipettiernadel noch zusätzliche Oeffnungen bestehen, durch die ein Druckausgleich zum Inneren des Behälters 3 möglich ist. Ferner kann die Hohlnadel 9 jetzt ohne aufwendig angeschliffene Spitze benutzt werden. Im Prinzip ist sogar eine stumpfe Form der Hohlnadel möglich.

Der Antrieb stellt keine besonderen Anforderungen und kann vom Fachmann ohne weiteres in der Art und Weise hergestellt werden, wie es von herkömmlichen Pipettiervorrichtungen bekannt ist. Es ist lediglich dafür zu sorgen, dass einander benachbarte Behälter 3 so im Abstand voneinander angeordnet sind, dass beim Durchstechen mit dem Vorstechwerkzeug l0 für die Pipettiernadel 9 und beim Pipettieren für das Vorstechwerkzeug l0 genügend Platz vorhanden ist.

Die anhand der Zeichnungen beschriebene Ausführungsform stellt natürlich nur eine Möglichkeit der Verwirklichung der Erfindung dar. Es sind durchaus vielfältige Modifikationen denkbar. So könnte die Erfindung auch bei Pipettiervorrichtungen mit Schwenkarmen aller Art eingesetzt werden. Ausserdem ist es möglich, die relative seitliche Verschiebung zwischen Behälter 3 einerseits, sowie Pipettiernadel und Vorstechwerkzeug andererseits durch die Transportvorrichtung für die Behälter anstatt durch den Arm 7 vornehmen zu lassen.

## Patentansprüche

l. Vorrichtung zur Entnahme von Flüssigkeitsmengen aus Behältern mit einer Entnahmehohlnadel (9), wobei die Behälter mit einem Deckel (6) verschlossen sind, dadurch gekennzeichnet, dass neben der und im Abstand von der Entnahmehohlnadel (9) ein Vorstechwerkzeug (l0) angebracht ist und dass Mittel (l,7) zur Steuerung der relativen mechanischen Bewegung zwischen Nadelträger und Behälter (3) vorgesehen sind derart, dass bei einer ersten Tiefbewegung des Nadelträgers der Deckel (6) des Behälters vom Vorstechwerkzeug durchstochen wird und danach, nach einer relativen seitlichen Verschiebung um den Abstand zwischen Vorstechwerkzeug und Hohlnadel die Hohlnadel durch den vorgestochenen Einschnitt den Deckel durchdringt.

## Claims

1. Device for withdrawing portions of liquid from receptacles with a withdrawal cannula (9), whereby the receptacles are closed by a cover (6), characterized in that a puncturing tool (10) is disposed adjacent and spaced apart from the withdrawal cannula (9) and means (1, 7) are provided for so controlling the relative mechanical movement between the cannula holder and the receptacle (3) that in a first descent of the cannula holder the cover (6) of the receptacle is pierced by the puncturing tool, and then, after a relative lateral movement by the distance between the puncturing tool (10) and the cannula (9) the cannula (10) penetrates through the puncture in the cover.

## Revendications

1. Dispositif pour le prélèvement de liquide à partir de réservoirs à l'aide d'une aiguille de prélèvement creuse (9), les réservoirs étant fermés par un couvercle (6), caractérisé en ce qu'un outil de pré-perçage (10) est placé à côté et à distance de l'aiguille de prélèvement creuse (9) et en ce que sont prévus des moyens (1, 7) pour commander le mouvement mécanique relatif entre le support de l'aiguille et le réservoir (3) de telle manière que lors d'un premier déplacement vers le bas du support de l'aiguille le couvercle (6) du réservoir est percé par l'outil de préperçage et en ce qu'ensuite, après un déplacement latéral relatif de la distance entre l'outil de pré-perçage et l'aiguille creuse, l'aiguille creuse traverse le couvercle par l'entaille pré-établie.

EP 0 221 315 B1

PUMPE

Fig.1

Fig.2